# FASCICULE DE BREVET EUROPEEN

(11) **EP 2 129 575 B1**
(45) Date de publication et mention de la délivrance du brevet: **02.01.2013**
(21) Numéro de dépôt: 08750463.5
(22) Date de dépôt: 03.01.2008
(51) Int. Cl.: B64C 1/14

(54) **PROCEDE D'ASSEMBLAGE D'UN HUBLOT POUR AERONEF**
VERFAHREN ZUR MONTAGE EINES FLUGZEUGKABINENFENSTERS
AIRCRAFT CABIN WINDOW ASSEMBLY METHOD

(30) Priorité: 05.01.2007 FR 0752534
(43) Date de publication de la demande: 09.12.2009
(73) Titulaire: AIRBUS OPERATIONS (S.A.S), 31060 Toulouse (FR)
(72) Inventeur: GALLANT, Guillaume, 31480 Lareole (FR); AGUERA, Damien, 31400 Toulouse (FR); BERNADET, Philippe, 31770 Colomiers (FR)
(74) Mandataire: Schmit, Christian Norbert Marie
(86) Numéro de dépôt international: PCT/FR2008/050008
(87) Numéro de publication internationale: WO 2008/096088

(56) Documents cités:
- EP-A- 1 647 481

## Description

La présente invention concerne un procédé d'assemblage d'un hublot sur une ouverture définie dans une paroi latérale du fuselage d'un aéronef.

Il est connu que les avions commerciaux comportent un fuselage typiquement pseudo-cylindrique renforcé par des éléments raidisseurs tels que des lisses et des cadres de manière à résister aux contraintes mécaniques qui s'exercent en vol par exemple.

Dans les avions commerciaux par exemple, des ouvertures sont réalisées dans les parois latérales du fuselage pour accueillir des hublots et permettre aux passagers de voir directement l'environnement extérieur au fuselage.

Toutefois, ces hublots génèrent de nombreux inconvénients. Tout d'abord, un hublot d'avion doit assurer une isolation thermique et phonétique de l'espace intérieur du fuselage de l'extérieur afin d'assurer le confort des passagers. Il doit pareillement être étanche à l'air et à l'eau.

L'encadrement du hublot qui est typiquement riveté à la peau du fuselage, doit également résister aux contraintes mécaniques telles que les charges dues à la flexion du fuselage et la pressurisation qui est appliquée au hublot.

Le hublot doit enfin respecter le profil aérodynamique de l'avion.

Toutes ces contraintes ont conduit les constructeurs à un raidissement spécifique de la zone hublot.

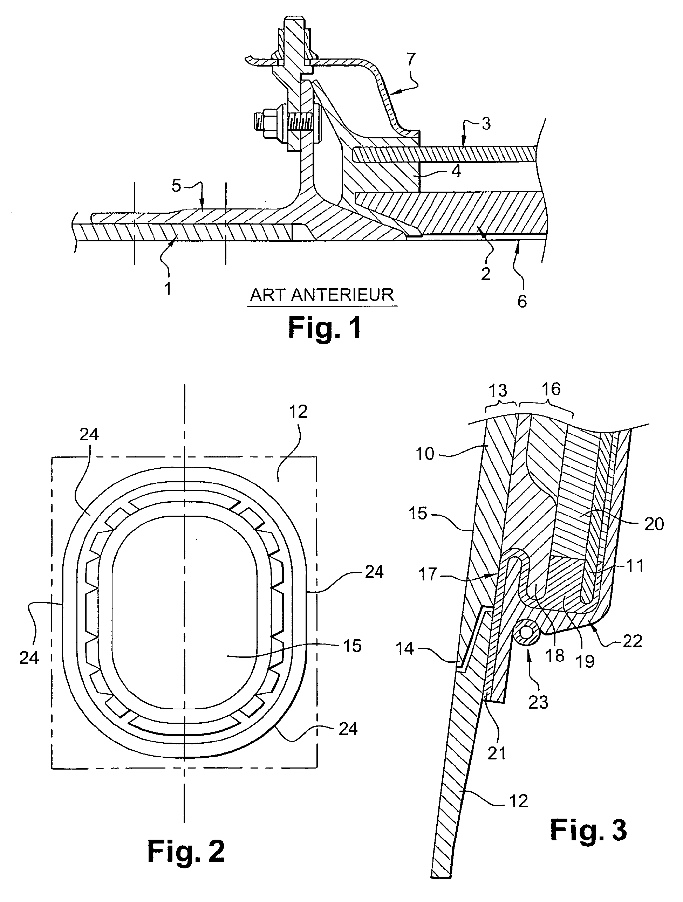

La Figure 1 représente schématiquement une vue partielle en coupe d'un hublot de l'art antérieur monté sur une paroi latérale 1 d'un fuselage d'avion.

Ce hublot d'avion comprend une glace externe 2 et une glace interne 3 formant une seconde barrière de sécurité, elle-même étant éventuellement protégée des rayures accidentelles par une troisième glace.

La glace externe 2 et la glace interne 3 sont séparées l'une de l'autre par un joint 4 qui assure de plus une fonction d'étanchéité.

Un encadrement de hublot 5 est solidarisé à la paroi latérale 1 du fuselage par deux rangées de rivets (non représentés) s'étendant sur toute la périphérie de l'ouverture 6 de la paroi latérale 1 du fuselage.

Les glaces 2, 3 et le joint 4 sont maintenus en position par des fixations mécaniques telles que des clips de maintien 7 ou des écrous et goujons.

L'assemblage de ces fixations mécaniques représente une tâche difficile et est consommateur de temps. Cet assemblage est donc coûteux en immobilisation de l'avion en cas de maintenance.

Ces fixations mécaniques représentent également un poids supplémentaire qui affecte de manière négative la consommation en kérosène de l'avion.

Par ailleurs, certaines de ces fixations mécaniques nécessitent la réalisation de trous supplémentaires dans la paroi latérale du fuselage. Or, la réalisation de trous dans une peau de fuselage en composite est assez contraignante en terme de tenue mécanique.

On observe que certaines appliques sont fragiles et font l'objet d'une maintenance accrue ce qui augmente les coûts d'entretien de l'appareil.

Le document EP 1 647 481 divulgue un tel élément de fenêtre de l'art antérieur, cet élément de fenêtre étant destiné à être installé dans une découpe de fenêtre dans la peau de carrosserie d'un moyen de transport en particulier d'un avion.

Il existe donc un besoin pressant pour un hublot d'avion simple dans sa conception et dans son mode opératoire qui permette son installation sans perçage supplémentaire de la peau du fuselage et une maintenance aisée et optimale de ce celui-ci.

L'objectif de la présente invention est donc de proposer un élément transparent externe économique, présentant une résistance mécanique très importante tout en présentant une masse minimale, et ne nécessitant pas pour son montage de perçage de la paroi latérale du fuselage d'un avion autre que l'ouverture du hublot, ni de fixations mécaniques pour lier la paroi du fuselage aux doubleurs.

Un autre objet de la présente invention est un procédé de montage d'un hublot d'avion comprenant un tel élément transparent externe sur une ouverture définie dans la paroi latérale d'un avion. Ce procédé d'assemblage particulièrement simple dans son mode opératoire permet une dépose et un montage plus rapides du hublot et par conséquent des coûts de maintenance réduits.

Ce montage est également plus sûr car un seul trou est réalisé dans cette paroi latérale par hublot. Ce montage ne remet avantageusement pas en cause la compatibilité des déplacements entre le hublot et la paroi du fuselage.

Enfin, un tel montage permet de protéger le bord libre de la paroi du fuselage, à l'endroit où elle est la plus fine, au moyen de l'élément transparent externe. Ce montage est néanmoins uniquement compatible avec un bord d'ouverture qui ne comporte pas de bord tombé.

A cet effet, l'invention concerne un procédé d'assemblage d'un hublot sur une ouverture définie dans une paroi latérale du fuselage d'un aéronef, ce hublot comprenant un élément transparent externe et au moins un élément transparent interne.

Selon l'invention, ce procédé comprend les étapes suivantes :
a) on réalise un évidement non débouchant sur une portion de cette paroi latérale le long du pourtour de ladite ouverture,
b) on positionne depuis l'extérieur du fuselage l'élément transparent externe dans l'ouverture, cet élément transparent externe ayant une première partie dont le diamètre est supérieur au diamètre de l'ouverture, cette première partie ayant une forme coopérant avec ladite portion de la paroi latérale de manière à bloquer latéralement et longitudinalement l'élément transparent externe dans cette ouverture,
c) l'élément transparent externe comprenant une deuxième partie présentant une gorge venant en saillie à l'intérieur du fuselage, on solidarise l'élément transparent externe et ledit au moins un élément transparent interne au fuselage par un cerclage, ce cerclage plaquant un joint contre au moins le fuselage et la paroi interne de la gorge.

Avantageusement, ces éléments transparents sont réalisés en un matériau répondant aux critères de résistance mécanique et de résistance à la corrosion liés à des applications dans le domaine aéronautique. A titre purement illustratif, les éléments transparents sont en acrylique étiré.

Dans différents modes de réalisation particuliers de ce procédé d'assemblage, chacun ayant ses avantages particuliers et susceptibles de nombreuses combinaisons techniques possibles:
- ledit évidement non débouchant comporte un chanfrein,

Ce chanfrein permet avantageusement d'assurer une liaison sensiblement étanche entre l'élément transparent externe et la paroi latérale du fuselage. Alternativement, ce chanfrein peut comporter de plus un creux en forme de demi-cylindre destiné à recevoir une saillie de forme complémentaire telle qu'un bourrelet.

Ce chanfrein permet encore de s'assurer que l'élément transparent externe ne dépasse pas du profil aérodynamique défini par la paroi latérale du fuselage.
- on assemble ledit au moins un élément transparent interne à l'élément transparent externe avec le joint préalablement à l'étape c),
- le cerclage comportant au moins deux éléments de cerclage, on solidarise ces éléments de cerclage entre eux par au moins un organe de fixation,

Ces organes de fixation sont de préférence mécaniques et comprennent des vis, boulons, jonc par exemple.
- l'élément transparent interne a une forme choisie dans le groupe comprenant une forme elliptique, une forme triangulaire, une forme rectangulaire, une forme de losange, ...

Bien entendu, l'ouverture dans la paroi latérale du fuselage comporte une forme sensiblement identique à celle de l'élément transparent interne de manière à offrir une vue sur l'environnement extérieur au fuselage optimale pour le passager. Cet élément transparent interne vient sensiblement en vis-à-vis de cette ouverture.

L'invention concerne également un élément transparent externe destiné à être monté sur une ouverture définie dans une paroi latérale du fuselage d'un aéronef.

Selon l'invention, cet élément transparent externe est monobloc. Il comprend au moins une première partie dont le diamètre est supérieur au diamètre de l'ouverture, cette première partie ayant une forme destinée à coopérer avec un évidement non débouchant réalisé sur ladite paroi latérale externe du fuselage le long du pourtour de ladite ouverture de manière à bloquer latéralement et longitudinalement cet élément transparent externe dans l'ouverture. Cet élément comprend de plus une deuxième partie présentant une gorge, cette gorge étant espacée de la surface externe de la première partie d'une distance d de manière à être placée à l'intérieur du fuselage lorsque l'élément transparent externe est plaqué contre ladite ouverture.

De préférence, cet évidement présentant un chanfrein, la première partie de l'élément transparent externe comporte un bord taillé obliquement pour coopérer avec ce chanfrein.

Dans différents modes de réalisation particuliers de cet élément transparent externe, chacun ayant ses avantages particuliers et susceptibles de nombreuses combinaisons techniques possibles:
- la gorge est espacée de la surface externe de la première partie d'une distance d de sorte qu'un de ses bords latéraux est confondu avec la paroi latérale du fuselage lorsque l'élément transparent externe est solidaire de ladite ouverture,
- l'élément transparent comprend de plus une troisième partie formant un élément transparent interne destinée à être placée sensiblement en vis-à-vis de l'ouverture.

Enfin, l'invention concerne un aéronef ayant un fuselage dont les parois latérales comportent des hublots.

Selon l'invention, au moins certains de ces hublots comprennent un élément transparent externe tel que décrit précédemment.

L'invention sera décrite plus en détail en référence aux dessins annexés dans lesquels:
- la figure 1 représente schématiquement une vue partielle en coupe d'un hublot d'avion de l'art antérieur;
- la figure 2 est une représentation schématique d'un hublot pour aéronef selon un mode de réalisation particulier de l'invention;
- la figure 3 représente schématiquement une vue partielle en coupe selon l'axe A-A du hublot de la Figure 2;

La Figure 3 montre une vue partielle en coupe d'un hublot monté sur une ouverture définie dans une paroi latérale du fuselage d'un aéronef selon un mode de réalisation particulier de l'invention.

Ce hublot comporte un élément transparent externe 10 et un élément transparent interne 11. L'élément transparent externe 10 est monté sur une ouverture définie dans une paroi latérale 12 du fuselage d'un aéronef. Ce fuselage peut être métallique ou en matériaux composites tels que des fibres de carbone par exemple.

L'élément transparent externe 10 est monobloc. Il comprend une première partie 13 dont le diamètre est supérieur au diamètre de ladite ouverture. Cette première partie 13 comporte un bord 14 partiellement taillé obliquement. Ce bord 14 présente ainsi deux surfaces sensiblement planes reliées entre elles par une portion en biais de sorte que cette première partie voit son diamètre se réduire par rapport à sa surface la plus externe 15. Sa surface la plus externe 15 a, pour sa part, une forme assurant une continuité aérodynamique avec la paroi latérale du fuselage de l'avion.

Cette première partie 13 est destinée à coopérer avec un évidement non débouchant réalisé sur la paroi latérale 12 externe du fuselage le long du pourtour de ladite ouverture. Cet évidement qui comprend un chanfrein, présente une forme sensiblement similaire à celle du bord 14 de la première partie de manière à bloquer latéralement et longitudinalement l'élément transparent externe 10 dans cette ouverture.

L'élément transparent externe 10 comporte une deuxième partie 16 présentant une gorge 17. Cette gorge 17 est espacée de la surface externe 15 de la première partie 13 d'une distance d de manière à être placée à l'intérieur du fuselage lorsque l'élément transparent externe 10 est solidarisé à l'ouverture.

Le bord de l'élément transparent externe 10 placé à l'intérieur du fuselage et entourant cette gorge 17, forme une lèvre 18. Un joint 19 souple permet d'assembler l'élément transparent externe 10 et l'élément transparent interne 11 en les maintenant séparés l'un et l'autre par un espace intercalaire 20. Ce joint vient prendre appui sur la lèvre 18 de l'élément transparent externe 10.

L'étanchéité du montage hublot/paroi latérale du fuselage est obtenue en plaquant une lèvre 21 de ce joint 19 contre le fuselage et la paroi interne de la gorge 17. Ce joint 19 est un joint continu. Le joint peut, par exemple, être un élastomère dérivé du caoutchouc.

Le hublot comporte un cerclage 22 permettant d'immobiliser l'ensemble transparent sur la paroi du fuselage, cet ensemble transparent comprenant les éléments transparents interne et externe 10, 11 et le joint 19.

Ce cerclage 22 comporte une saillie apte à coopérer avec la gorge 17 pour plaquer la lèvre du joint 19 contre la paroi interne de celle-ci. Ce cerclage 22 comportant au moins deux éléments de cerclage, est lui-même immobilisé en position par un jonc 23 venant prendre appui dans une rainure réalisée sur la face externe du cerclage 22.

L'ouverture et l'élément transparent interne 11 peuvent avoir une forme elliptique et des dimensions de l'ordre de 350 x 250 mm offrant ainsi un champ de vision plus important pour le passager que les hublots connus de l'art antérieur. La première partie de l'élément transparent externe 10 présente alors des dimensions supérieures à 350 x 250 mm de manière à venir couvrir l'évidement réalisé dans la paroi latérale du fuselage le long du pourtour de l'ouverture.

Alternativement, leur forme peut être choisie dans le groupe comprenant une forme triangulaire, une forme rectangulaire, une forme de losange, ...

L'invention concerne également un procédé d'assemblage de ce hublot comprenant un élément transparent externe 10 et au moins un élément transparent interne 11.

Ce procédé consiste à réaliser un évidement non débouchant comportant avantageusement un chanfrein sur une portion de la paroi latérale le long du pourtour de l'ouverture. Cet évidement forme ainsi une bande ayant un creux sur le pourtour de l'ouverture.

Puis, on positionne cet élément transparent externe 10 depuis l'extérieur du fuselage dans l'ouverture de sorte qu'une première partie 13 de cet élément transparent externe vienne coopérer avec l'évidement non débouchant de manière à bloquer latéralement et longitudinalement l'élément transparent externe dans l'ouverture.

L'élément transparent externe 10 présente alors une deuxième partie 16 ayant une gorge 17 venant en saillie à l'intérieur du fuselage. De préférence, cette gorge 17 a un de ses bords venant dans l'alignement de la paroi latérale du fuselage.

On positionne ensuite un joint 19 pour assembler un élément transparent interne 11 à cet élément transparent externe 12. On plaque une lèvre 21 de ce joint contre la paroi latérale 12 du fuselage, le fond de la gorge 17 au moyen d'un cerclage 22 pour assurer l'étanchéité du montage. Ce cerclage 22 permet de bloquer les six degrés de liberté du hublot ainsi obtenu.

Pour poser ce cerclage 22 qui comporte de préférence deux éléments de cerclage, on engage chaque élément de cerclage latéralement sur l'ensemble transparent comportant le joint 19, l'élément transparent externe 10 et l'élément transparent interne 11. Ce mouvement de positionnement des éléments de cerclage est symbolisé par les flèches 24 sur la figure 2.

Avantageusement; l'élément transparent externe 11 a une forme sensiblement elliptique et des dimensions supérieures à 350 x 250 mm.

## Revendications

1. Procédé d'assemblage d'un hublot sur une ouverture définie dans une paroi latérale du fuselage d'un aéronef, ledit hublot comprenant un élément transparent externe (10) et au moins un élément transparent interne (11) **caractérisé en ce qu'**il comprend les étapes suivantes :
a) on réalise un évidement non débouchant sur une portion de ladite paroi latérale (12) le long du pourtour de ladite ouverture,
b) ledit élément transparent externe étant monobloc, on positionne depuis l'extérieur du fuselage ledit élément transparent externe (10) dans ladite ouverture, ledit élément transparent externe ayant une première partie (13) dont le diamètre est supérieur au diamètre de ladite ouverture, ladite première partie (13) ayant une forme coopérant avec la portion de ladite paroi latérale (12) de manière à bloquer latéralement et longitudinalement ledit élément transparent externe (10) dans ladite ouverture,
c) ledit élément transparent externe (10) comprenant une deuxième partie (16) présentant une gorge (17) venant en saillie à l'intérieur dudit fuselage, on solidarise ledit élément transparent externe (10) et ledit au moins un élément transparent interne (11) audit fuselage par un cerclage (22), ledit cerclage (22) plaquant un joint (21) contre au moins le fuselage et la paroi interne de ladite gorge (17).

2. Procédé selon la revendication 1, **caractérisé en ce qu'**on assemble ledit au moins un élément transparent interne (11) audit élément transparent externe (10) avec ledit joint (19, 21) préalablement à l'étape c).

3. Procédé selon la revendication 1 ou 2, **caractérisé en ce que** ledit évidement non débouchant comprend un chanfrein.

4. Procédé selon l'une quelconque des revendications 1 à 3, **caractérisé en ce que** le cerclage (22) comportant au moins deux éléments de cerclage, on solidarise lesdits éléments de cerclage entre eux par au moins un organe de fixation.

5. Procédé selon la revendication 4, **caractérisé en ce que** ledit organe de fixation comprend un jonc (23).

6. Procédé selon la revendication 4 ou 5, **caractérisé en ce que** le cerclage (22) comportant deux éléments de cerclage, on engage chaque élément de cerclage latéralement sur l'ensemble transparent comportant ledit joint (19, 21), ledit élément transparent externe (10) et ledit au moins un élément transparent interne (11).

7. Procédé selon l'une quelconque des revendications 1 à 6, **caractérisé en ce que** ledit joint (19, 21) est un joint continu.

8. Procédé selon l'une quelconque des revendications 1 à 7, **caractérisé en ce que** ledit élément transparent externe (10) a une forme sensiblement elliptique et des dimensions supérieures à 350 x 250 mm.

9. Elément transparent externe destiné à être monté sur une ouverture définie dans une paroi latérale (12) du fuselage d'un aéronef, **caractérisé en ce qu'**il est monobloc et comprend au moins :
- une première partie (13) dont le diamètre est supérieur au diamètre de ladite ouverture, ladite première partie (13) ayant une forme destinée à coopérer avec un évidement non débouchant réalisé sur ladite paroi latérale externe (12) du fuselage le long du pourtour de ladite ouverture de manière à bloquer latéralement et longitudinalement ledit élément transparent externe (10) dans ladite ouverture,
- une deuxième partie (16) présentant une gorge (17), ladite gorge (17) étant espacée de la surface externe de la première partie (13) d'une distance d de manière à être placée à l'intérieur du fuselage lorsque l'élément transparent externe (10) est plaqué contre ladite ouverture.

10. Elément selon la revendication 9, **caractérisé en ce que** ladite gorge (17) est espacée de la surface externe de la première partie (13) d'une distance d de sorte que un des bords latéraux de ladite gorge (17) est confondu avec la paroi latérale (12) du fuselage lorsque l'élément transparent externe (10) est solidaire de ladite ouverture.

11. Aéronef ayant un fuselage dont les parois latérales comportent des hublots, **caractérisé en ce qu'**au moins certains desdits hublots comprennent un élément transparent externe (10) selon la revendication 9 ou 10.

## Claims

1. Method for assembling a cabin window on an opening defined in a side wall of the fuselage of an aircraft, the said cabin window comprising an external transparent element (10) and at least one internal transparent element (11), **characterized in that** it comprises the following steps:
a) a non-open-ended recess is made on a portion of the said side wall (12) along the periphery of the said opening,
b) since the said external transparent element is in one piece, the said external transparent element (10) is put in place from the outside of the fuselage into the said opening, the said external transparent element having a first portion (13) of which the diameter is greater than the diameter of the said opening, the said first portion (13) having a shape that cooperates with the portion of the said side wall (12) so as to laterally and longitudinally immobilize the said external transparent element (10) in the said opening,
c) since the said external transparent element (10) comprises a second portion (16) having a groove (17) protruding inside the said fuselage, the said external transparent element (10) and the said at least one internal transparent element (11) are secured to the said fuselage by a strapping (22), the said strapping (22) flattening a seal (21) against at least the fuselage and the internal wall of the said groove (17).

2. Method according to Claim 1, **characterized in that** the said at least one internal transparent element (11) is assembled to the said external transparent element (10) with the said seal (19, 21) prior to step c).

3. Method according to Claim 1 or 2, **characterized in that** the said non-open-ended recess comprises a bevel.

4. Method according to any one of Claims 1 to 3, **characterized in that** since the strapping (22) comprises at least two strapping elements, the said strapping elements are secured together by at least one fastening member.

5. Method according to Claim 4, **characterized in that** the said fastening member comprises a trim strip (23).

6. Method according to Claim 4 or 5, **characterized in that**, since the strapping (22) comprises two strapping elements, each strapping element is engaged laterally on the transparent assembly comprising the said seal (19, 21), the said external transparent element (10) and the said at least one internal transparent element (11) .

7. Method according to any one of Claims 1 to 6, **characterized in that** the said seal (19, 21) is a continuous seal.

8. Method according to any one of Claims 1 to 7, **characterized in that** the said external transparent element (10) has a substantially elliptical shape and dimensions greater than 350 x 250 mm.

9. External transparent element designed to be mounted on an opening defined in a side wall (12) of the fuselage of an aircraft, **characterized in that** it is in one piece and comprises at least:
- a first portion (13) of which the diameter is greater than the diameter of the said opening, the said first portion (13) having a shape designed to interact with a non-open-ended recess made on the said external side wall (12) of the fuselage along the periphery of the said opening so as to laterally and longitudinally immobilize the said external transparent element (10) in the said opening,
- a second portion (16) having a groove (17), the said groove (17) being spaced from the external surface of the first portion (13) by a distance d so as to be placed inside the fuselage when the external transparent element (10) is pressed against the said opening.

10. Element according to Claim 9, **characterized in that** the said groove (17) is spaced from the external surface of the first portion (13) by a distance d such that one of the lateral edges of the said groove (17) is indistinguishable from the side wall (12) of the fuselage when the external transparent element (10) is secured to the said opening.

11. Aircraft having a fuselage of which the side walls comprise cabin windows, **characterized in that** at least some of the said cabin windows comprise an external transparent element (10) according to Claim 9 or 10.

## Patentansprüche

1. Verfahren zum Einbau eines Fensters auf einer in einer Seitenwand des Rumpfs eines Luftfahrzeugs festgelegten Öffnung, wobei das Fenster ein äußeres transparentes Element (10) und mindestens ein inneres transparentes Element (11) enthält, **dadurch gekennzeichnet, dass** es die folgenden Schritte enthält:
a) es wird eine nicht durchgehende Aussparung auf einem Teil der Seitenwand (12) entlang des Umfangs der Öffnung hergestellt,
b) da das äußere transparente Element einstückig ist, wird das äußere transparente Element (10) von der Außenseite des Rumpfs in der Öffnung positioniert, wobei das äußere transparente Element einen ersten Teil (13) hat, dessen Durchmesser größer ist als der Durchmesser der Öffnung, wobei der erste Teil (13) eine Form hat, die mit dem Abschnitt der Seitenwand (12) zusammenwirkt, um das äußere transparente Element (10) seitlich und in Längsrichtung in der Öffnung zu blockieren,
c) da das äußere transparente Element (10) einen zweiten Teil (16) enthält, der eine ins Innere des Rumpfs vorstehende Rille (17) aufweist, werden das äußere transparente Element (10) und das mindestens eine innere transparente Element (11) durch eine Umreifung (22) fest mit dem Rumpf verbunden, wobei die Umreifung (22) eine Dichtung (21) gegen mindestens den Rumpf und die Innenwand der Rille (17) drückt.

2. Verfahren nach Anspruch 1, **dadurch gekennzeichnet, dass** das mindestens eine innere transparente Element (11) vor dem Schritt c) an das äußere transparente Element (10) mit der Dichtung (19, 21) angebaut wird.

3. Verfahren nach Anspruch 1 oder 2, **dadurch gekennzeichnet, dass** die nicht durchgehende Aussparung eine Abschrägung aufweist.

4. Verfahren nach einem der Ansprüche 1 bis 3, **dadurch gekennzeichnet, dass**, da die Umreifung (22) mindestens zwei Umreifungselemente aufweist, die Umreifungselemente durch mindestens ein Befestigungsorgan fest miteinander verbunden werden.

5. Verfahren nach Anspruch 4, **dadurch gekennzeichnet, dass** das Befestigungsorgan einen Ring (23) enthält.

6. Verfahren nach Anspruch 4 oder 5, **dadurch gekennzeichnet, dass**, da die Umreifung (22) zwei Umreifungselemente aufweist, jedes Umreifungselement seitlich auf die transparente Einheit eingesetzt wird, die die Dichtung (19, 21), das äußere transparente Element (10) und das mindestens eine innere transparente Element (11) aufweist.

7. Verfahren nach einem der Ansprüche 1 bis 6, **dadurch gekennzeichnet, dass** die Dichtung (19, 21) eine durchgehende Dichtung ist.

8. Verfahren nach einem der Ansprüche 1 bis 7, **dadurch gekennzeichnet, dass** das äußere transparente Element (10) eine im Wesentlichen elliptische Form und Abmessungen von mehr als 350 x 250 mm hat.

9. Äußeres transparentes Element, das dazu bestimmt ist, auf eine in einer Seitenwand (12) des Rumpfs eines Luftfahrzeugs festgelegte Öffnung montiert zu werden, **dadurch gekennzeichnet, dass** es einstückig ist und mindestens Folgendes enthält:
- einen ersten Teil (13), dessen Durchmesser größer ist als der Durchmesser der Öffnung, wobei der erste Teil (13) eine Form hat, die dazu bestimmt ist, mit einer nicht durchgehenden Aussparung zusammenzuwirken, die auf der äußeren Seitenwand (12) des Rumpfs entlang des Umfangs der Öffnung hergestellt ist, um das äußere transparente Element (10) seitlich und in Längsrichtung in der Öffnung zu blockieren,
- einen zweiten Teil (16), der eine Rille (17) aufweist, wobei die Rille (17) von der Außenfläche des ersten Teils (13) um einen Abstand d entfernt ist, um im Inneren des Rumpfs angeordnet zu werden, wenn das äußere transparente Element (10) gegen die Öffnung gedrückt wird.

10. Element nach Anspruch 9, **dadurch gekennzeichnet, dass** die Rille (17) von der Außenfläche des ersten Teils (13) um einen Abstand d entfernt ist, so dass einer der Seitenränder der Rille (17) mit der Seitenwand (12) des Rumpfs zusammenfällt, wenn das äußere transparente Element (10) fest mit der Öffnung verbunden ist.

11. Luftfahrzeug mit einem Rumpf, dessen Seitenwände Fenster aufweisen, **dadurch gekennzeichnet, dass** zumindest manche der Fenster ein äußeres transparentes Element (10) nach Anspruch 9 oder 10 enthalten.
